# EUROPÄISCHE PATENTSCHRIFT

(11) **EP 1 824 864 B1**
(45) Veröffentlichungstag und Bekanntmachung des Hinweises auf die Patenterteilung: **15.10.2008**
(21) Anmeldenummer: 05819216.2
(22) Anmeldetag: 13.12.2005
(51) Int. Cl.: C07F 7/10, C01B 35/00

(54) **KONTINUIERLICHES VERFAHREN FÜR SILAZANSPALTUNGEN**
CONTINUOUS SILAZANE CLEAVAGE METHOD
PROCEDE CONTINU DE DECOMPOSITION DE SILAZANE

(30) Priorität: 13.12.2004 DE 102004059942
(43) Veröffentlichungstag der Anmeldung: 29.08.2007
(73) Patentinhaber: Max-Planck-Gesellschaft zur Förderung der Wissenschaften e.V., 80539 München (DE)
(72) Erfinder: JANSEN, Martin, 71229 Leonberg (DE); KOLIOS, Grigorios, 70540 Lörrach (DE); JÄSCHKE, Britta, 70195 Stuttgart (DE)
(74) Vertreter: Dey, Michael
(86) Internationale Anmeldenummer: PCT/EP2005/013384
(87) Internationale Veröffentlichungsnummer: WO 2006/063798

(56) Entgegenhaltungen:
- WO-A-20/05087842
- DE-A1- 10 045 427

## Beschreibung

Die vorliegende Erfindung betrifft ein kontinuierliches Verfahren für Silazanspaltungen, insbesondere für die Herstellung molekularer Vorläufer für nicht-oxidische anorganische Keramiken.

Reaktionen zur Spaltung von Silazanen, die chargenweise durchgeführt werden, sind im Stand der Technik bereits beschrieben (Metalloorganicheskaya Khimiya (1989), 2(3), 701-2, Kalikhman, I.D. et al.; Journal of Organometallic Chemistry (1989), 361(2), 147-55, Kalikhman, I.D. et al.; Zhurnal Obshchei Khimii (1981), 51(8), 1824-9, Sheludyakov,V.D. et al.).

Von besonderem Interesse sind Keramiken aus den anionischen Komponenten C und N sowie 2 bis 4 weiteren Elementen wie B, Al, Ga, In, Si, Ge, P, Ti, Zr, V, Nb, Ta, Cr, Mo, W, Fe oder Zn in kationischer Funktion. Solche Keramiken, beispielsweise bestehend aus Si, B, N und C, zeichnen sich durch herausragende thermische, mechanische und chemische Beständigkeit aus und sind in der Kombination aller anwendungsrelevanter Eigenschaften beispielsweise für den Einsatz in Wärmekraftmaschinen den konkurrierenden Werkstoffen deutlich überlegen. Voraussetzung für diese vorteilhaften Eigenschaften ist vor allem die Realisierung eines Netzwerkes mit einer regelmäßigen Alternanz von Elementen mit anionischer und kationischer Funktion, letztere in einer homogenen Verteilung über Bereiche oberhalb von 1 bis 2 nm.

Diese Voraussetzungen sind realisierbar durch die Synthese und Bereitstellung von molekularen Einkomponentenvorläufern, die die jeweils gewünschte Kombination an kationischen Komponenten über Stickstoff miteinander verbrückt enthalten. Diese molekularen Vorläufer werden anschließend polymerisiert und schließlich durch Pyrolyse keramisiert. Da die polymeren Zwischenstufen nach allen Verfahren der Polymertechnologie verarbeitet werden können, erschließt sich eine ungewöhnliche Breite an Einsatzformen wie z.B. Fasern, Folien, Infiltraten, Beschichtungen und Formkörpern. Besonders bedeutsam ist das Potenzial dieser neuen Werkstofffamilie für die Herstellung von faserverstärkten keramischen Kompositen. Wegen der konkurrenzlos guten Eigenschaften unter hohen Temperaturen in Luft und zugleich mechanischer Belastung, ist das Anwendungspotential gesichert. Ein Vordringen in Bereiche, die von metallischen und herkömmlichen keramischen Werkstoffen besetzt sind, ist wegen der vielfachen technischen Vorteile wünschenswert, aber nur möglich, wenn ein kostengünstiges Herstellungsverfahren verfügbar ist.

Für das Subsystem Si/B/N/C sind Synthesen im Übersichtsartikel *"*Amorphous Multinary Ceramics in the Si-B-N-C System" (M. Jansen et al., Struct. Bond. 2002, 101, 137), sowie in DE 41 07 108 A1, DE 100 45 427 A1, DE 100 45 428 A1 und 101 04 536 A1 beschrieben für die Varianten der Leitstruktur für einen Einkomponentenvorläufer der Formel (1) RₓHal₃₋ₓSiNR¹-BR_{y}Hal_{2-y}
wobei R jeweils unabhängig einen Kohlenwasserstoffrest mit 1 bis 20 C-Atomen darstellt, Hal jeweils unabhängig Cl, Br oder I bedeutet, R¹ jeweils unabhängig einen Kohlenwasserstoffrest mit 1 bis 20 C-Atomen oder Wasserstoff darstellt, x = 0, 1 oder 2 und y = 0 oder 1 ist.

Den vorbeschriebenen Verfahren ist gemeinsam, dass ausgehend von Me₃Si-NR¹SiMe₃ durch zwei aufeinanderfolgende Silazanspaltungen zunächst mit SiHal₄₋ₓRₓ, dann mit BHal_{3-y}R_{y}, das jeweilige Zielmolekül in einem zweistufigen Flüssigphasenprozess im Batch-Modus synthetisiert wird.

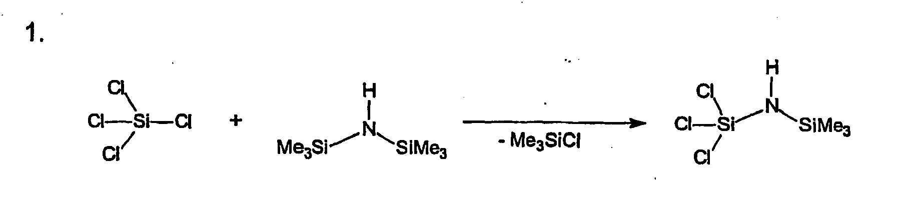

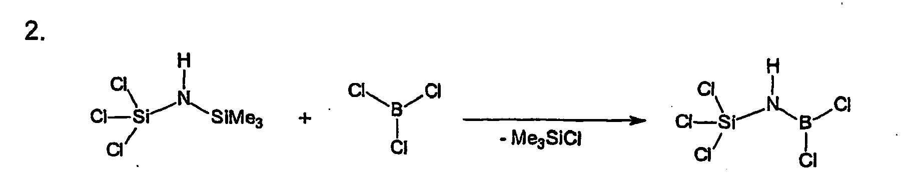

Hierbei handelt es sich um Laborsynthesen, die nicht ohne Weiteres als ökologisch und ökonomisch optimierte Produktion im technischen Maßstab durchgeführt werden können.

Probleme bereiten können insbesondere:
1. Die Reaktionszeiten für die erste Silazanspaltung liegen zwischen 20 und 48 Stunden, für die zweite bei ca. 12 Stunden pro Batch. Deshalb sind auf diesem Wege keine befriedigenden Raum-Zeitausbeuten erzielbar.
2. Werden die Reaktionstemperaturen erhöht, so gehen die Selektivitäten verloren und es kann zur Bildung von unerwünschten Nebenprodukten wie RₓHal₃₋ₓSi-NR¹-SiHal₃₋ₓRₓ oder Me₃Si-NR¹-SiHal₂₋ₓRₓ-NR¹-SiMe₃ kommen.
3. Bisher sind große Überschüsse an teuren Einsatzstoffen erforderlich, deren Kosten die Wirtschaftlichkeit des Verfahrens beeinträchtigen.
4. Eine Synthese im "Batch"-Verfahren ist vergleichsweise unwirtschaftlich, da jedem Reaktionsansatz eine zeit- und kostenaufwändige Inertisierung der Reaktionsapparaturen vorausgeht.
5. Es entsteht ein hoher Kostenanfall durch die notwendige Kühlung während der Synthese sowie durch die Isolierung und Reinigung des Produktes durch destillative Prozesse.

In DE 100 45 428 A1 wird ein alternativer Darstellungsweg zu oben definierten Einkomponentenvorläufern beschrieben, wonach eine Aminkomponente R¹NH₂ nacheinander mit einer Silankomponente SiHal₄₋ₓRₓ und einer Borankomponente BHal_{3-y}R_{y} umgesetzt wird:

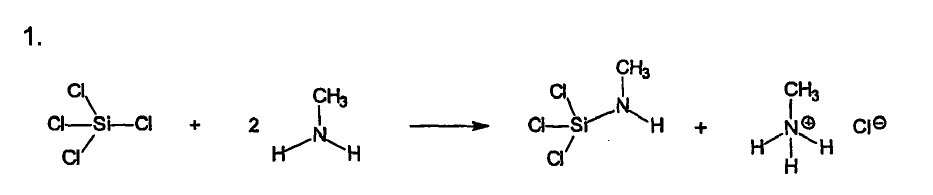

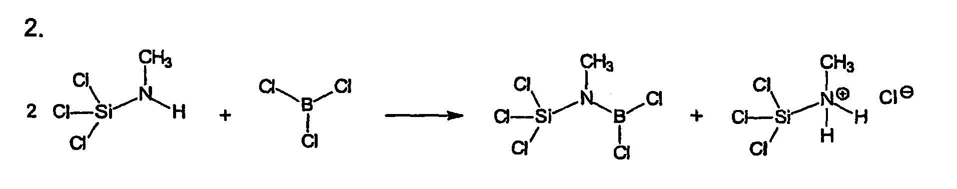

In dieser Folge von zwei aufeinander folgenden Aminolysen ist der in beiden Schritten auftretende zwangsläufige Anfall von schwer abtrennbaren salzartigen Hydrochloriden von Nachteil, die zudem die Produktausbeute bezogen auf das eingesetzte Material erheblich schmälert. Gleichwohl gelang für diesen Zugang die Realisierung eines kontinuierlichen Herstellungsverfahrens, bei dem der Reaktor zyklisch zwischen einer Produktionsphase und einer Regenerationsphase (Austreibung der Hydrochloride) geschaltet wird (DE 102 28 990 A1).

Während das beschriebene Verfahren bereits gute Ergebnisse liefert, weist es aus technischer und wirtschaftlicher Sicht noch Nachteile auf:
1. Die Raum-Zeitausbeute wird durch die intermittierende Fahrweise empfindlich gemindert. Abhilfe kann nur geschaffen werden durch Installation eines Parallelreaktors (unter Erhöhung des Investitionsaufwandes).
2. Sowohl die Ausgangskomponente Amin als auch die Zwischenstufe Silylamin werden je zur Hälfte als Hydrochloride gebunden und im Regenerationszyklus ausgeschleust. Dieses mindert die Ausbeute an Endprodukt bezogen auf die wertvollen Einsatzstoffe erheblich.
3. Die Zielprodukte müssen aufwändig isoliert und gereinigt werden.
4. Reste an Zwischen- und Endprodukt werden bei der thermischen Austreibung pyrolysiert und führen so im Langzeitbetrieb zu Verkrustungen im Reaktor.

Durch Silazanspaltungen können viele interessante Verbindungen und insbesondere molekulare Einkomponentenvorläufer für nicht-oxidische Keramiken hergestellt werden. Die bisher bekannten Batch-Verfahren weisen jedoch die oben diskutierten Nachteile auf. Eine Aufgabe der vorliegenden Erfindung bestand daher in der Bereitstellung eines Verfahrens zur Spaltung von Silazanverbindungen, welches die Nachteile des Standes der Technik zumindest teilweise ausräumt.

Eine weitere Aufgabe der vorliegenden Erfindung bestand in der Bereitstellung eines leistungsfähigen allgemein anwendbaren Verfahrens zur Herstellung von Einkomponentenvorläufern für nicht-oxidische Keramiken, welches insbesondere folgende Vorgaben erfüllen sollte:
- Das Verfahren sollte kontinuierlich durchführbar sein, ohne die Zwischenstufe gesondert zu isolieren oder zu lagern.
- Die Produktausbeute soll in dem Sinne optimal sein, dass die Einsatzstoffe möglichst vollständig in das Produkt umgewandelt werden.

Die Erfindung ist auf ein kontinuierliches Verfahren zur Silazanspaltung gerichtet, bei dem wenigstens eines der Edukte gasförmig eingesetzt wird. Ein kontinuierliches Verfahren zur Spaltung von Silazanverbindungen wird beschrieben. Es wurde festgestellt, dass Silazanspaltungen kontinuierlich durchgeführt werden können und dadurch die oben genannten Nachteile im Hinblick auf eine schlechte Raumzeitausbeute überwunden werden können.

Silazane sind Silicium-Stickstoff-Verbindungen, welche eine Si-N-Bindung aufweisen. Mit Silazanspaltungen können Element-N-Verbindungen aufgebaut werden.

Erfindungsgemäß wurde festgestellt, dass eine kontinuierliche Verfahrensführung insbesondere dann vorteilhaft und möglich ist, wenn wenigstens eines der für die Silazanspaltung eingesetzten Edukte gasförmig verwendet wird. Dabei kann das Silazan oder das Spaltungsreagenz oder beide in gasförmiger Form eingesetzt werden. In einer bevorzugten Ausführungsform werden alle Edukte gasförmig eingesetzt und die Reaktion findet in der Gasphase statt. In einer weiteren bevorzugten Ausführungsform wird wenigstens ein Edukt in gasförmiger Form eingesetzt und wenigstens ein anderes Edukt in flüssiger Form. Bei dieser Vorgehensweise wird das Verfahren vorteilhafterweise im Gegenstrom durchgeführt, wodurch eine nahezu quantitative oder sogar quantitative Umsetzung erzielt werden kann. Bei einer solchen Reaktionsführung wird wenigstens eine Reaktionsstufe vorteilhafterweise als Gas-Flüssigreaktor ausgeführt, beispielsweise als Blasenkolonne, Sprühkolonne, Füllkörperkolonne, Fallfilmreaktor oder Reaktor mit externer Rückführung.

Eine weitere Verbesserung des erfindungsgemäßen kontinuierlichen Verfahrens kann man dadurch erzielen, dass das Zielprodukt oder/und unerwünschte Nebenprodukte aus dem Reaktionsgemisch und somit aus dem Gleichgewicht entfernt werden. Das Zielprodukt kann beispielsweise durch Kristallisation, Kondensation oder/und die Verwendung eines Lösungsmittels von den restlichen Komponenten des Reaktionsgemischs isoliert werden. Nebenprodukte, insbesondere leichtflüchtige Nebenprodukte, werden bevorzugt durch Partialkondensation, Destillation,

Pervaporation, Gaspermeation oder Adsorption aus dem Reaktionsgemisch entfernt. Die Phasenabscheidung zwischen Kondensatphase und Gasphase erfolgt bevorzugt in einem Prallabscheider oder in einem Zyklon. Mit der erfindungsgemäßen kontinuierlichen Verfahrensführung ist es insbesondere möglich, eine hohe Selektivität hinsichtlich der gewünschten Zielprodukte zu erhalten. Die Selektivität kann weiter durch Durchführung der Umsetzung mit einem der Edukte in Überschuss, insbesondere einem mindestens 1,5-fachen, mehr bevorzugt einem mindestens 2-fachen Überschuss sichergestellt werden.

Insgesamt können mit dem erfindungsgemäßen kontinuierlichen Verfahren die Einsatzstoffe nahezu quantitativ in die gewünschten Zielverbindungen umgesetzt werden. In einer bevorzugten Ausführungsform der vorliegenden Erfindung wird die hierin beschriebene Silazanspaltung verwendet, um Verbindungen mit dem Strukturmerkmal N-Y herzustellen. Die Erfindung betrifft deshalb auch ein kontinuierliches Verfahren umfassend eine Silazanspaltung, wie oben beschrieben, zur Herstellung einer Verbindung, welche das Strukturmerkmal N-Y aufweist, worin Y jeweils unabhängig ausgewählt ist aus B, Al, Ga, In, Si, Ge, P, Ti, Zr, V, Nb, Ta, Cr, Mo, W, Fe oder Zn, wobei man eine Silazanverbindung mit einer Verbindung der Formel (2), ausgewählt aus
BHal₃₋ₓRₓ, AlHal₃₋ₓRₓ, GaHal₃₋ₓRₓ, InHal₃₋ₓRₓ, SiHal_{4-y}R_{y}, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{6-z}R_{z}, FeHal₃₋ₓRₓ oder ZnCl₂
worin x = 0 oder 1, y = 0, 1 oder 2 und z = 0, 1, 2 oder 3, Hal ausgewählt ist aus F, Cl, Br und I, und R Wasserstoff oder einen Kohlenwasserstoffrest mit 1 bis 20 C-Atomen darstellt, umsetzt.

Eine besonders bevorzugte Ausführungsform ist ein kontinuierliches Verfahren zur Herstellung einer Verbindung, welche das Strukturmerkmal X-N-Y aufweist, worin X und Y jeweils unabhängig ausgewählt sind aus B, Al, Ga, In, Si, Ge, P, Ti, Zr, V, Nb, Ta, Cr, Mo, W, Fe oder Zn, umfassend die Schritte
Umsetzen einer Silazanverbindung, insbesondere einer Verbindung der Formel (3) R²₃SiNR¹SiR³₃,
worin R² und R³ jeweils unabhängig voneinander einen Kohlenwasserstoffrest mit 1-20 Kohlenstoffatomen darstellt und R¹ Wasserstoff oder einen Kohlenwasserstoffrest mit 1-20 C-Atomen darstellt,
nacheinander in beliebiger Reihenfolge mit einer Verbindung der Formel (2), ausgewählt aus
BHal₃₋ₓRₓ, AlHal₃₋ₓRₓ, GaHal₃₋ₓRₓ, InHal₃₋ₓRₓ, SiHal_{4-y}R_{y}, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{6-z}R_{z}, FeHal₃₋ₓRₓ oder ZnCl₂
worin x = 0 oder 1, y = 0, 1 oder 2 und z = 0, 1, 2 oder 3, Hal ausgewählt ist aus F, Cl, Br und I, und R Wasserstoff oder einen Kohlenwasserstoffrest mit 1 - 20 C-Atomen darstellt,
und einer Verbindung der Formel (4), ausgewählt aus
BHal₃₋ₓRₓ, AlHal₃₋ₓRₓ, GaHal₃₋ₓRₓ, InHal₃₋ₓRₓ, SiHal_{4-y}R_{y}, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{6-z}R_{z}, FeHal₃₋ₓRₓ oder ZnCl₂
worin x = 0 oder 1, y = 0, 1 oder 2, z = 0, 1, 2 oder 3, Hal ausgewählt ist aus F, Cl, Br und I, und R Wasserstoff oder einen Kohlenwasserstoffrest mit 1-20 C-Atomen darstellt. In dieser Ausführungsform werden zwei Silazanspaltungen durchgeführt. Bei diesen beiden Umsetzungen liegen die Verbindungen der Formeln (3) und (4) bevorzugt gasförmig vor.

Überraschenderweise wurde festgestellt, dass das Verfahren zur Herstellung von molekularen Einkomponentenvorläufern für nicht-oxidische Keramiken kontinuierlich durchgeführt werden kann. Die Umsetzung der Silazanverbindung mit einer Verbindung der Formel (2) erfolgt bevorzugt in der Gasphase. Alternativ kann einer der beiden Reaktanden in Form einer Flüssigkeit eingesetzt werden. Bevorzugt liegt hierbei die Verbindung der Formel (3) in flüssiger Phase, und die Verbindung der Formel (2) in gasförmiger Phase vor. Das Produkt der Silazanspaltung fällt in flüssiger Form an, wodurch die gewünschten Produkte kostengünstig und in großem Meßstab hergestellt werden können. Das erfindungsgemäße Verfahren zur Herstellung von Verbindungen mit dem Strukturmerkmal X-N-Y, insbesondere von Verbindungen mit der Formel (1) RₓHal₃₋ₓSi-NR¹BR_{y}Hal_{2-y} läuft über eine zweifache Silazanspaltung von R²₃SiNR¹SiR³₃ (3).

In Formel (3) können R² und R³ vorzugsweise jeweils unabhängig einen Alkyl- und/oder Arylrest mit 1-7 C-Atomen, vorzugsweise Methylreste bedeuten.

Die erfindungsgemäße Silazanspaltung und insbesondere die Umsetzung einer Verbindung der Formel (3) mit einer Verbindung der Formel (2) erfolgt bevorzugt bei Temperaturen von -100 °C bis 300 °C, mehr bevorzugt bei Temperaturen von > 25 °C und < 100 °C, noch mehr bevorzugt bei Temperaturen von ≥ 50 °C und < 70 °C, und am meisten bevorzugt bei Temperaturen ≥ 55 °C und ≤ 65 °C. Weiterhin wird ein geeigneter Druck eingestellt, damit die Verbindung der Formel (3), je nach Bedarf flüssig oder gasförmig, und die Verbindungen der Formeln (2) und (4) gasförmig sind, wobei üblicherweise Drücke von 0,1 mbar bis 2 bar, insbesondere von 1 mbar bis 1 bar angewendet werden. Das Zwischenprodukt der ersten Silazanspaltung bzw. das durch die zweite Silazanspaltung erhaltene Endprodukt fallen unter diesen Bedingungen jeweils in flüssiger Form an.

Um eine möglichst quantitative Umsetzung in die gewünschten Produkte zu erzielen, wird die Silazanverbindung, insbesondere eine Verbindung der Formel (3), vorzugsweise mit einem Überschuss an Verbindungen der Formel (2) und/oder einem Überschuss an Verbindungen der Formel (4) umgesetzt. Bevorzugt werden mindestens das 1,1-fache, mehr bevorzugt mindestens das 1,2-fache, noch mehr bevorzugt mindestens das 1,5-fache, und am meisten bevorzugt mindestens das 2-fache an Verbindungen der Formel (2) und/oder Verbindungen der Formel (4), bezogen auf die Silazanverbindung, eingesetzt.

In einer bevorzugten Ausführungsform des erfindungsgemäßen Verfahrens werden Druck und Temperatur so eingestellt, dass die Edukte (2) und (4) gasförmig, Edukt (3), Zwischenprodukt und Endprodukt aber flüssig vorliegen. Bei dieser Verfahrensführung ist es möglich, Zwischenprodukt bzw. Endprodukt in kondensierter Form auf einfache Weise aus dem Verfahren abzutrennen. Die Abtrennung kann beispielsweise durch Kristallisation, Kondensation oder/und die Verwendung eines Lösungsmittels erfolgen. Bevorzugt wird das Produkt durch Kondensation aus dem Gleichgewicht abgetrennt und gewonnen.

Die Verfahrensführung erfolgt weiterhin bevorzugt so, dass Nebenprodukte, soweit sie überhaupt gebildet werden, aus dem Reaktionsgemisch entfernt werden. Ein bei der Reaktion oftmals gebildetes Nebenprodukt ist R₃SiHal, beispielsweise Me₃SiHal. Druck und Temperatur werden deshalb geeigneterweise so eingestellt, dass der Partialdruck eines während der Reaktion gebildeten Nebenprodukts R₃SiHal niedriger als sein Sättigungsdampfdruck ist, sodass also das Nebenprodukt in gasförmiger Form vorliegt. Solche gasförmigen Nebenprodukte können dann auf einfache Weise abgetrennt werden, beispielsweise durch Partialkondensation, Destillation, Pervaporation, Gaspermeation oder Adsorption.

Die Isolierung des Reaktionsproduktes beziehungsweise die Abtrennung von Nebenprodukten kann vorteilhafterweise mittels Phasenabscheidung zwischen Kondensatphase und Gasphase, beispielsweise in einem Prallabscheider oder in einem Zyklon erfolgen.

In einer bevorzugten Ausführungsform wird das erfindungsgemäße Verfahren als Reaktivdestillation durchgeführt.

Es ist weiterhin bevorzugt, ein Edukt in flüssiger Phase im Gegenstrom quantitativ mit einem zweiten Edukt in der gasförmigen Phase umzusetzen. Bevorzugt werden eine oder beide Reaktionsstufen als Gas-Flüssigreaktionen ausgeführt, wobei geeignete Reaktoren z. B. Blasenkolonnen, Sprühkolonnen, Füllkörperkolonnen, Fallfilmreaktoren oder Reaktoren mit externer Rückführung sein können.

Die Verbindungen mit den Formeln (2) und (4) werden bevorzugt gasförmig umgesetzt. Es ist weiterhin bevorzugt, die Synthese in einem zweistufigen Reaktionsprozess durchzuführen, in dem beide Reaktionsstufen in der Gasphase erfolgen.

Um eine möglichst quantitative Umsetzung der Einsatzstoffe in die Zielverbindungen zu erreichen, werden vorteilhafterweise nicht umgesetzte Einsatzstoffe oder Edukte in den Prozess zurückgeführt.

Die Erfindung betrifft insbesondere eine kontinuierliche Fahrweise von zwei oder mehr aufeinander folgenden Silazanspaltungen in einer Schaltung von geschlossenen Strömungsapparaten, ohne zwischenzeitliche Isolierung oder Lagerung des Zwischenproduktes. Als einziges Nebenprodukt fällt R²₃SiCl bzw. R³₃SiCl an, das durch Reaktion mit R¹NH₂ in das Edukt R²₃SiNR¹SiR³₃ zurückgeführt werden kann. Als ein besonders vorteilhafter Aspekt des erfindungsgemäßen Verfahrens fallen keine Salze als Nebenprodukte an.

In einer bevorzugten Ausführungsform der Erfindung reagiert in der ersten Stufe eine Verbindung der Formel (2), bevorzugt SiHal₄₋ₓRₓ, mit einer Silazariverbindung, insbesondere einer Verbindung der Formel (3), bevorzugt Me₃SiNR¹SiMe₃, in der Gasphase bzw. in einer Gasphasen-Flüssigphasen-Reaktion bei Temperaturen von -100 °C bis 300 °C, insbesondere von 25 bis 100 °C und bevorzugt von ≥ 55 °C bis ≤ 65 °C, und Drücken im Reaktionsvolumen von 0,1 mbar bis 2 bar, und zwar jeweils bei p/T-Bedingungen, unter denen die Verbindung der Formel (2) gasförmig und die Verbindung der Formel (3) gasförmig oder flüssig ist, der Sättigungsdampfdruck des jeweiligen Reaktionsproduktes jedoch überschritten wird und dieses daher als Flüssigkeit kondensiert, so dem homogenen Gleichgewicht entzogen und durch einen Phasenscheider abgetrennt der nächsten Stufe zugeführt wird.

In einer zweiten Stufe wird dann das Zwischenprodukt mit einer Verbindung der Formel (4) umgesetzt und zwar vorzugsweise bei p/T Bedingungen, bei denen die Verbindung der Formel (4) gasförmig und das Zwischenprodukt flüssig ist. Die zweite Stufe wird bevorzugt bei Temperaturen von -100 °C bis +30 °C durchgeführt.

Die Erfindung stützt sich auf die Beobachtung, dass sich der beschriebene Reaktionstyp überraschenderweise selbst bei hohen Temperaturen mit hoher Selektivität durchführen lässt. Dies wird erfindungsgemäß bevorzugt durch zwei Maßnahmen erreicht:
1. Im Reaktionsvolumen liegt stets ein Überschuss an einer Verbindung der Formel (2), bevorzugt SiHal₄₋ₓR_{x,} vor, so dass die zweifache Aminierung beispielsweise zu Me₃Si-NR¹-SiHal₂₋ₓRₓ-NR¹-SiMe₃ (x = 0,1) unterdrückt wird.
2. Das gewünschte Zwischenprodukt, zum Beispiel Hal₃₋ₓRₓSiNR¹SiMe₃ wird wirkungsvoll als Flüssigphase abgezogen oder der Gasphase durch Kondensation entzogen und auf diese Weise eine unerwünschte Weiterreaktion zu Hal₃₋ₓRₓSiNR¹SiRₓHal₃₋ₓ unterbunden.

Ist die Differenz der Siedepunkte des Einsatzstoffes der Formel (2), z.B. SiHal₄₋ₓRₓ und des entsprechenden Nebenproduktes, z.B. Me₃SiHal genügend groß, befindet sich am Kopf des Reaktionsvolumens ein Kondensator, an dem der im Überschuss zugesetzte Einsatzstoff der Formel (2), z.B. SiHal₄₋ₓRₓ abgeschieden und das Nebenprodukt, z.B. Me₃SiHal gasförmig durchgelassen wird. Das nach der Trennung der Phasen zurückgewonnene Edukt, z.B. SiHal₄₋ₓRₓ wird zurück in den Reaktor geführt. Im stationären Betrieb werden dann frische Verbindungen der Formel (3), z.B. Me₃SiNR¹SiMe₃ und der Formel (2), z.B. SiHal₄₋ₓRₓ mit der gleichen Menge pro Zeiteinheit dem Reaktor zugeführt, mit der das Nebenprodukt, z.B. Me₃SiHal aus dem Reaktor entfernt wird.

Liegen die Siedepunkte des Einsatzstoffes der Formel (2), z.B. SiHal₄₋ₓRₓ und des Nebenproduktes, z.B. Me₃SiHal hingegen sehr nah beieinander, können für die Trennung dieser Komponenten ihre stark unterschiedlichen Molmassen (z.B.: Molmasse SiCl₄: 169,9 Molmasse Me₃SiCl: 108,6) sinnvoll ausgenutzt werden. Geeignete Verfahren dafür sind Membranverfahren mit porösen Membranen oder die Adsorption an Molekularsieben. In diesem Fall schließt sich an den Kopf des Reaktors zunächst eine derartige geeignete Trennstufe an, wonach der an Edukt, z.B. SiHal₄₋ₓRₓ angereicherte Teilstrom kondensiert und in den Prozess zurückgeführt wird. Frisches Edukt, z.B. SiHal₄₋ₓRₓ wird dem Prozess in einer Stoffmenge pro Zeiteinheit zugeführt, die der kumulierten von ausgetragenem Edukt, z.B. SiHa₄₋ₓRₓ und Nebenprodukt, z.B. Me₃SiHal, entspricht, während frische Verbindungen der Formel (3), z.B. Me₃SiNR¹SiMe₃ mit der gleichen Menge pro Zeiteinheit dem Reaktor zugeführt werden, mit der das Nebenprodukt, z.B. Me₃SiHal aus dem Reaktor entfernt wird.

Das Zwischenprodukt, z.B. Hal₃₋ₓRₓSiNR¹SiMe₃. wird gasförmig oder flüssig in die zweite Reaktionsstufe eingeleitet und mit einem Überschuss an Verbindungen der Formel (4), z.B. BCl₃ umgesetzt. Druck und Temperatur im Reaktor werden geeignet eingestellt, dass der Partialdruck des Nebenproduktes, z.B. Me₃SiHal, niedriger als sein Sättigungsdampfdruck bleibt. Insbesondere Temperaturen von -100 °C bis 300°C und Drücke von 0,1 mbar bis 2 bar erfüllen die gestellten Anforderungen an die p/T-Bedingungen. Nebenprodukt, z.B. Me₃SiHal, und überschüssige Verbindungen der Formel (4), z.B. BCl₃, werden über den Kopf des Reaktors abgezogen. Das Nebenprodukt, z.B.Me₃SiHal, wird kondensiert und für die Herstellung des Ausgangsstoffes der Formel (3), z.B. Me₃SiNR¹SiMe₃ wieder verwendet. Das Edukt der Formel (4), z.B. BCl₃, wird in den Reaktor zurückgeführt. Das Endprodukt fällt flüssig an und kann aus dem Sumpf des Reaktors abgeführt werden und, falls erforderlich, durch Partialkondensation, Destillation oder Pervaporation gereinigt werden.

Das erfindungsgemäße Verfahren kann insbesondere zur Herstellung von Verbindungen eingesetzt werden, welche das Strukturmerkmal X-N-Y aufweisen, worin X und Y jeweils unabhängig B, Al, Ga, In, Si, Ge, P, Ti, Zr, V, Nb, Ta, Cr, Mo, W, Fe oder Zn sein können. Besonders bevorzugt wird es zur Herstellung einer Verbindung eingesetzt, die die Formel (1) RₓHal₃₋ₓSi-NR¹-BR_{y}Hal_{2-y} aufweist, worin Hal jeweils unabhängig Cl, Br oder I bedeutet, R jeweils unabhängig einen Kohlenwasserstoffrest mit 1 bis 20 C-Atomen oder Wasserstoff darstellt, R¹ einen Kohlenwasserstoffrest mit 1 bis 20 C-Atomen oder Wasserstoff darstellt, x = 0, 1 oder 2 ist und y = 0 oder 1 ist.

Die gewünschten Produkte werden bevorzugt in einem zweistufigen Prozess hergestellt. Die Verbindungen gemäß Formel (1) werden beispielsweise hergestellt, indem eine Hexamethyldisilazan-Komponente (HMDS) Me₃SiNR¹SiMe₃ nacheinander mit einer Silan-Komponente SiHal₄₋ₓRₓ und einer Boran-Komponente BHal_{3-y}R_{y} in beliebiger Reihenfolge umgesetzt wird. Bevorzugt wird im ersten Schritt die Silan-Komponente, welche in gasförmigem Zustand eingesetzt wird, mit der in flüssigem oder gasförmigem Aggregatszustand eingesetzten Hexamethyldisilazan-Komponente kontinuierlich oder in Portionen, mit oder ohne Trägergas, in der Gasphase bzw. in einer Gasphasen-Flüssigphasen-Reaktion zur Umsetzung gebracht. Das gebildete Zwischenprodukt wird wiederum bevorzugt im zweiten Schritt mit der Boran-Komponente im Überschuss in einem inerten Lösemittel, bevorzugt in der Gasphase oder mehr bevorzugt in reiner kondensierter Phase, weiter umgesetzt. Alternativ kann das Zwischenprodukt in flüssigem Aggregatszustand mit der in gasförmigem Zustand vorliegenden Boran-Komponente zur Reaktion gebracht werden. Die Zielverbindung entsteht je nach p/T Bedingungen in reiner Form oder vermischt mit dem Nebenprodukt Me₃SiCl und der überschüssigen Borankomponente und kann mit einem Phasenscheider isoliert werden. Auf diesem Reaktionsweg können unter anderem die Verbindungen MeCl₂SiNHBCl₂ (MADB) (1a), Cl₃SiNHBCl₂ (TADB) (1b), (CH₃)₂ClSiNHBCl₂ (DADB), Cl₃SiNCH₃BCl₂ (DMTA) oder CH₃Cl₂SiNCH₃BCl₂ (DDMA) in reiner Form hergestellt werden. Für MADB werden dabei zunächst Methyltrichlorsilan, welches in gasförmigem Zustand eingesetzt wird, und Hexamethyldisilazan, welches in gasförmigem oder flüssigem Aggregatszustand eingesetzt wird, in der Gasphase bzw. in einer Gasphasen-Flüssigphasen-Reaktion zur Reaktion gebracht. Für TADB wird bei analoger Reaktionsführung Tetrachlorsilan an Stelle von Methyltrichlorsilan eingesetzt. Als Zwischenprodukte entstehen MeCl₂SiNHSiMe₃ bzw. Cl₃SiNHSiMe₃, die jeweils in der Gasphase oder vorzugsweise in kondensierter Form mit gasförmigem Trichlorboran umgesetzt werden.

In der Formel RₓHal₃₋ₓSi-NR¹-BR_{y}Hal_{2-y} (1) können die Reste R und R¹ jeweils unabhängig Wasserstoff oder einen Kohlenwasserstoffrest mit 1 bis 20 C-Atomen, vorzugsweise mit 1 bis 10 C-Atomen bedeuten.

Ein Kohlenwasserstoffrest ist hierin ein Rest, der aus den Elementen Kohlenstoff und Wasserstoff gebildet ist. Erfindungsgemäß können Kohlenwasserstoffreste verzweigt oder unverzweigt, gesättigt oder ungesättigt sein. Der Kohlenwasserstoffrest kann auch aromatische Gruppen enthalten, die wiederum mit Kohlenwasserstoffresten substituiert sein können. Beispiele für bevorzugte Kohlenwasserstoffreste sind z. B. unverzweigte gesättigte Kohlenwasserstoffreste, wie etwa C₁- bis C₂₀-Alkyl, insbesondere Methyl, Ethyl, n-Propyl, n-Butyl, n-Pentyl, n-Hexyl, n-Heptyl, n-Octyl, n-Nonyl und n-Decyl. Bei den Resten R und/oder R¹ kann es sich aber auch um verzweigte gesättigte Kohlenwasserstoffreste, insbesondere verzweigte C₃- bis C₂₀-Alkyle handeln, wie etwa i-Propyl, i-Butyl, t-Butyl sowie weitere verzweigte Alkylreste. In einer Ausführungsform umfassen die Reste R und/oder R¹ eine oder mehrere olefinisch ungesättigte Gruppen. Beispiele für solche Reste sind Vinyl, Allyl, Butenyl, Pentenyl, Hexenyl, Heptenyl, Octenyl, Nonenyl, Decenyl, Pentadienyl, Heptadienyl, Octadienyl, Nonadienyl und Decadienyl. Die Reste R und/oder R¹ können auch eine Alkin-Gruppe, also eine C≡C-Bindung, enthalten. In einer weiteren Ausführungsform enthält mindestens ein Rest R und/oder R¹ bevorzugt alle Reste R und/oder R¹ eine aromatische Gruppe, insbesondere eine aromatische Gruppe mit 5 bis 10 C-Atomen, insbesondere 5 oder 6 C-Atomen, wie etwa eine Phenylgruppe oder eine mit einem Kohlenwasserstoff, insbesondere einem C₁- bis C₁₀-Kohlenwasserstoff, substituierte aromatische Gruppe, insbesondere Phenylgruppe, wie etwa Methylphenyl, Dimethylphenyl, Trimethylphenyl, Ethylphenyl oder Propylphenyl. Einschließlich der Substituenten umfasst der aromatische Rest bevorzugt 5 bis 20, insbesondere bis 10 C-Atome. Die Kohlenwasserstoffreste R sowie R¹ können dabei jeweils unabhängig voneinander variiert werden.

Bevorzugt umfasst mindestens ein Rest R oder/und R¹ und insbesondere alle Reste R und/oder R¹ Wasserstoff, eine C₁- bis C₂₀-Alkylgruppe, insbesondere eine C₁- bis C₆-Alkylgruppe, eine Phenylgruppe, eine Vinylgruppe oder eine Allylgruppe oder einen Kohlenwasserstoffrest mit 1 bis 3 C-Atomen, insbesondere Methyl, Ethyl oder Propyl und besonders bevorzugt Methyl.

Der Rest Hal steht für ein Halogenatom und bedeutet insbesondere Cl, Br oder I, wobei es bevorzugt ist, dass mindestens ein Rest Hal und bevorzugt alle Reste Hal Cl bedeuten.

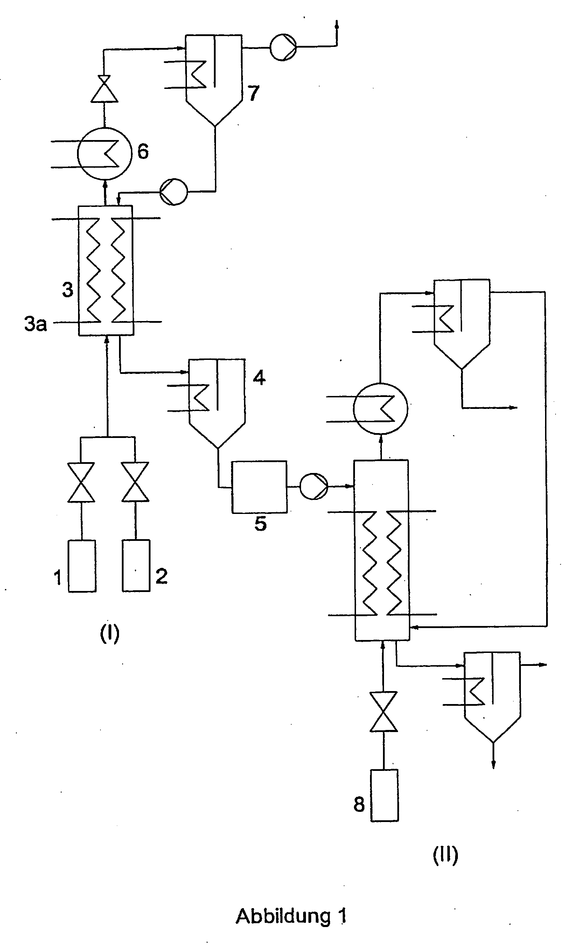

Die Erfindung wird durch die beigefügten Abb. 1-4 und die nachfolgenden Beispiele weiter beschrieben. Abb. 1-4 zeigen schematisch Varianten der Produktionsanlage für das zweistufige Verfahren gemäß der vorliegenden Erfindung.

### Beispiele

### Beispiel 1: Synthese von MADB (1a)

Abb. 1 zeigt das Verfahrensfließbild gemäß einer Ausführungsform der Erfindung. Die Abläufe in den Reaktionsstufen I und II sind unabhängig voneinander und werden sequentiell beschrieben.
MeSiCl₃ wird aus dem thermostatisierten Vorlagebehälter 1 und HMDS aus dem thermostatisierten Vorlagebehälter 2 entweder rein oder in einem inerten Trägergasstrom, beispielsweise N₂, He, Ar, CO₂, in den Reaktor 3 dosiert. Die Einsatzstoffe werden beide gemeinsam punktweise, oder beide örtlich verteilt oder einer punktweise und einer örtlich verteilt in den Reaktor 3 der ersten Reaktionsstufe eingeleitet. Durch die Art der Dosierung und der Strömungsführung wird im gesamten Reaktionsraum ein stöchiometrischer Überschuss von MeSiCl₃ gegenüber HMDS von mindestens 2:1 gewährleistet.
Die Reaktortemperatur wird mit Hilfe eines externen Wärmeträgers 3a auf eine Temperatur zwischen -100 °C und 300°C, insbesondere zwischen 25 ° C und 100 °C, geregelt. Der Gesamtdruck im Reaktor 3 beträgt zwischen 0,1 mbar und 2 bar. Druck und Temperatur sind dabei jeweils unter der Maßgabe aufeinander abgestimmt, dass die Partialdrücke der Einsatzverbindungen MeSiCl₃ und HMDS ihre jeweiligen Sättigungsdampfdrücke unterschreiten, der Partialdruck des Zwischenproduktes MeCl₂SiNHSiMe₃ jedoch seinen Sättigungsdruck überschreitet. Unter diesen Bedingungen kondensiert das Zwischenprodukt, wird über einen Phasenscheider 4 aus dem Reaktionsvolumen ausgeschleust und direkt der zweiten Reaktionsstufe zugeführt, alternativ kann es in einem Pufferbehälter 5 zwischengelagert werden. Am Kopf des Reaktors 3 werden von den flüchtigen Komponenten der Einsatzstoff MeSiCl₃ an einem Wärmeüberträger 6 kondensiert und über einen Phasenscheider 7 von dem Nebenprodukt Me₃SiCl getrennt. Die Temperatur des Wärmeüberträgers 6 ist so eingestellt, dass bei dem gegebenen Druck MeSiCl₃ seinen Sättigungsdampfdruck überschreitet, Me₃SiCl seinen Sättigungsdampfdruck jedoch unterschreitet. MeSiCl₃ wird in den Reaktor zurückgeführt. Im stationären Betrieb werden MeSiCl₃ und HMDS mit der gleichen Stoffmenge pro Zeiteinheit aus den Vorratsbehältern 1 und 2 nachgespeist, mit der Me₃SiCl aus dem Reaktor entfernt wird.

Das Zwischenprodukt aus der ersten Reaktionsstufe wird in der zweiten Reaktionsstufe mit einem Überschuss an BCl₃ umgesetzt, das aus dem thermostatisierten Vorlagebehälter 8 zugeführt wird. Die zweite Reaktionsstufe kann analog zur ersten Stufe aufgebaut sein, wobei die Reaktortemperatur zwischen -100 °C und +30 °C eingestellt und der Druck so abgestimmt wird, dass wenigstens BCl₃ gasförmig vorliegt, oder nach Stand der Technik (DE 4 107 108, DE 10 045 428, DE 10 104 536) durchgeführt werden. Das Endprodukt wird durch Phasenscheidung gereinigt.
Die Phasenabscheider 4 und 7 können auf dem Prinzip mechanischer Abtrennung funktionieren, beispielsweise Prallabscheider oder Zyklone. Es können aber auch thermische oder physikalisch-chemische Trennverfahren eingesetzt werden. Insbesondere kommen die Destillation/Rektifikation oder die Pervaporation in Betracht.
Die Produktausbeute an MADB beträgt über beide Stufen mindestens 76% bezogen auf das eingesetzte HMDS. Die Charakterisierung des Produktes erfolgt durch Massenspektrometrie und Kernresonanzspektroskopie. MS (70 eV): *m*/*z* = 196 (M⁺-CH₃), 174 (M⁺-HCl), 158 (M⁺-HCl-CH₃), 138 (M⁺-2HCl), ¹H-NMR: δ = 0,47; 0,49; ¹³C-NMR: δ = 6,3; 9,3; 128,4; ¹¹B-NMR: δ = 36,4; 41,8.

### Beispiel 2: Synthese von MADB (1a)

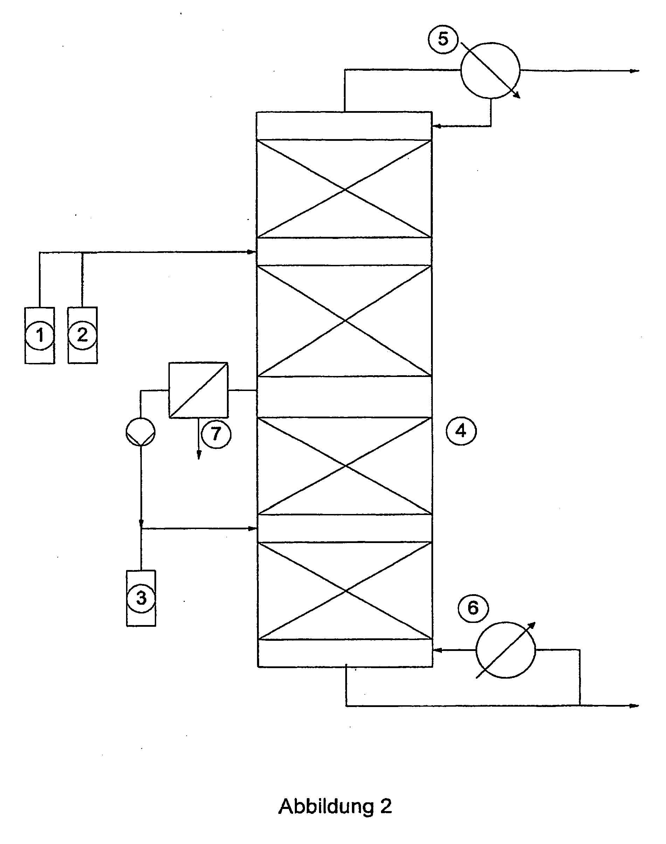

Die Siedepunkte der Edukte, des Zwischenprodukts, des Nebenprodukts und des Endprodukts liegen in einem günstigen Verhältnis zueinander, so dass die Synthese von MADB durch Reaktivdestillation möglich ist. Abb. 2 zeigt das Schema dieser Verfahrensvariante. Der Prozess läuft in einer Vakuumkolonne 4 ab. Die Edukte der ersten Reaktionsstufe werden in den Verstärkungsabschnitt gemeinsam oder an unterschiedlichen Positionen 1 und 2 eingeleitet. Das leichtflüchtige Nebenprodukt MeSiCl₃ wird zum Kopf der Kolonne hin und das Zwischenprodukt Cl₃SiNHSiMe₃ zum Abtriebsteil der Kolonne hin angereichert. BCl₃ wird durch den Zulauf 3 separat in die Kolonne eingeleitet. Das Produkt wird im Sumpf der Kolonne gesammelt.

### Beispiel 3: Synthese von TADB (1b)

Die Darstellung von Verbindung (1 b) erfolgt analog zur Darstellung von Verbindung (1a) in Beispiel 1, allerdings werden als Edukte statt MeSiCl₃ und HMDS SiCl₄ und HMDS eingesetzt. Am Kopf des Reaktors 3 verlassen unreagiertes SiCl₄ und Nebenprodukt Me₃SiCl, gasförmig gemeinsam den Reaktorraum, da sie die gleiche Verdampfungstemperatur haben. Das SiC₄/Me₃SiCl-Gemisch wird dementsprechend über eine geeignete Trennstufe 7 getrennt (Membranverfahren mit porösen Membranen oder die Adsorption an Molekularsieben) und der an SiCl₄ angereicherte Teilstrom in einem Totalkondensator 6 kondensiert und in die erste Reaktionsstufe zurückgeführt. Im stationären Betrieb werden SiCl₄ und HMDS dem Prozess in einer Stoffmenge pro Zeiteinheit aus den Vorratsbehältern 1 und 2 nachgeführt, die der kumulierten Stoffmenge von Me₃SiCl und ausgetragenem SiCl₄ entspricht.
Die Produktausbeute an TADB beträgt über beide Stufen mindestens 85% bezogen auf das eingesetzte HMDS. Die Charakterisierung des Produktes erfolgt durch Massenspektrometrie und Kernresonanzspektroskopie. MS (70 eV): m/z = 231 (M⁺), 196 (M⁺-Cl), 160 (M⁺-Cl -HCl); ¹H-NMR: δ = 4,41; "B-NMR: δ = 35,7; ²⁹Si-NMR: δ = -23,7.

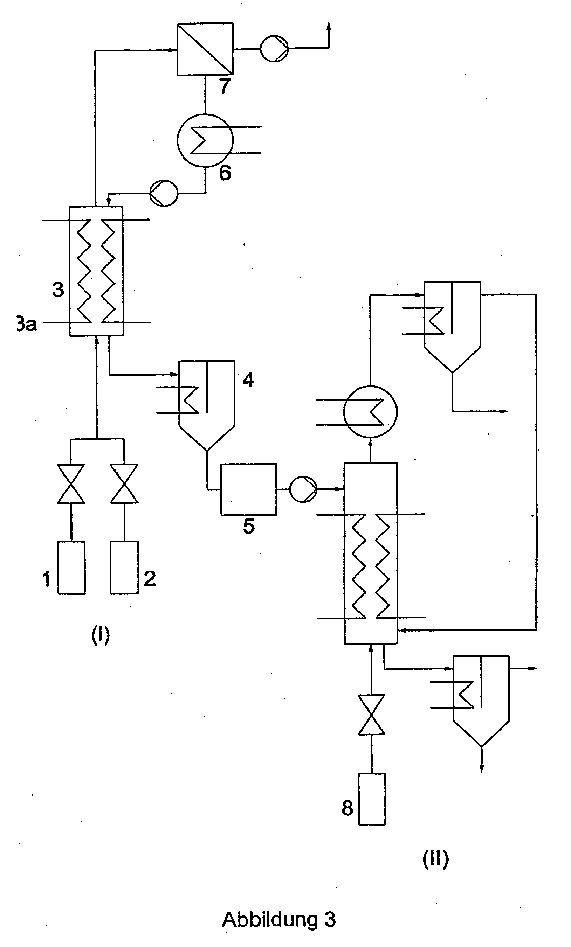

Abb. 3 zeigt das modifizierte Verfahrensfließbild gemäß der beschriebenen Ausführungsform der Erfindung.

### Beispiel 4: Synthese von TADB (1b)

Die Darstellung von Verbindung (1b) erfolgt analog zur Darstellung von Verbindung (1a) in Beispiel 2 (Abb. 2), allerdings werden als Edukte statt MeSiCl₃ und HMDS SiCl₄ und HMDS eingesetzt. Außerdem werden die Edukte der ersten Reaktionsstufe in den Verstärkungsabschnitt bevorzugt an unterschiedlichen Positionen 1 und 2 eingeleitet. Der Einsatzstoff HMDS wird wegen seines höheren Siedepunktes oberhalb des Einsatzstoffes SiCl₄ in Verstärkungsabschnitt eingespeist.

### Beispiel 5: Synthese von TADB (1b)

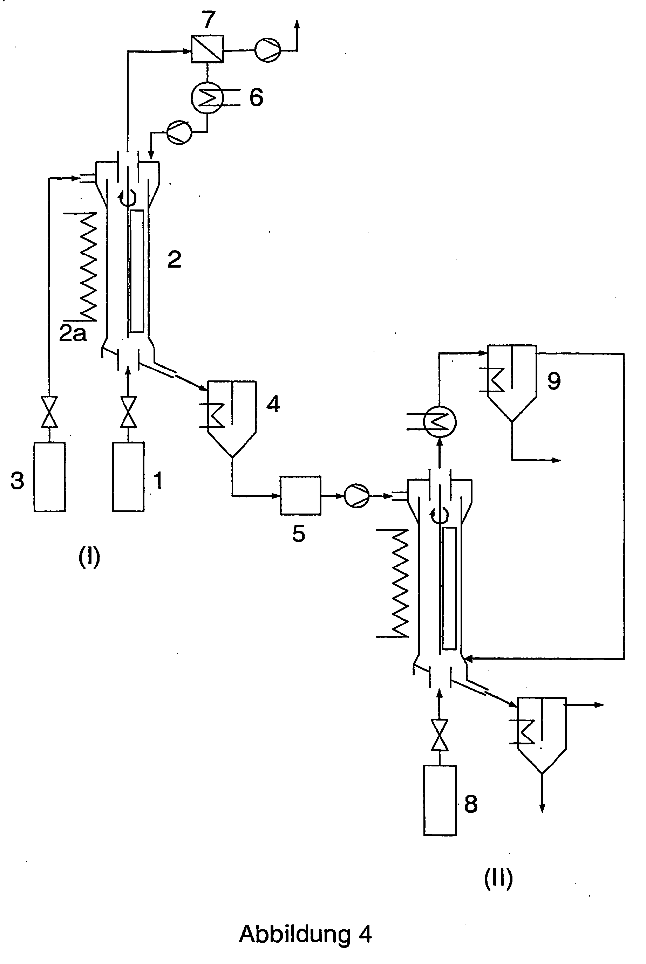

Abb. 4 zeigt das Verfahrensfließbild gemäß einer Ausführungsform der Erfindung. Die Abläufe in den Reaktionsstufen (I) und (II) sind unabhängig voneinander und werden sequentiell beschrieben.

SiCl₄ wird aus einem thermostatisierten Vorlagebehälter 1 entweder rein oder in einem inerten Trägergasstrom, beispielsweise N₂, He, Ar, CO₂, in den unteren Teil des Reaktors der ersten Reaktionsstufe 2 (z. B. Fallfilmreaktor) gasförmig dosiert. HMDS wird aus dem Vorratsbehälter 3 flüssig am Kopf des Reaktors eindosiert und reagiert mit gasförmigem SiCl₄ im Gegenstrom. Die Stoffmengenflüsse der beiden Reaktanden werden so geführt, dass im Reaktionsraum ein stöchiometrischer Überschuss von SiCl₄ gegenüber HMDS von 1,2 bis 1,5 eingehalten wird.

Die Reaktortemperatur wird mit Hilfe eines externen Wärmeträgers 2a zwischen - 50°C und 200°C geregelt. Der Gesamtdruck im Reaktor 2 beträgt zwischen 1 mbar und 1 bar. Druck und Temperatur sind dabei jeweils unter der Maßgabe aufeinander abgestimmt, dass die Partialdrücke der Einsatzverbindung SiCl₄ und des Nebenproduktes MeSiCl₃ ihre jeweiligen Sättigungsdampfdrücke unterschreiten, HMDS und das Zwischenprodukt Cl₃SiNHSiMe₃ jedoch flüssig vorliegen. Dies ist beispielsweise bei der Kombination 60°C / 300 mbar der Fall. Das Zwischenprodukt wird am Fuß des Fallfilmreaktors flüssig ausgeschleust und direkt der zweiten Reaktionsstufe zugeführt. Alternativ kann das Zwischenprodukt in einem Pufferbehälter 5 zwischengelagert werden. Am Kopf des Reaktors 2 verlassen unreagiertes SiCl₄ und das Nebenprodukt Me₃SiCl gasförmig gemeinsam den Reaktorraum, da sie nahezu die gleiche Verdampfungstemperatur haben. Ihre weitere Behandlung erfolgt wie in Beispiel 3 beschrieben.

Das Zwischenprodukt aus der ersten Reaktionsstufe wird in der zweiten Reaktionsstufe mit einem Überschuss an BCl₃ (1,1 - 1,5-fach) umgesetzt, das aus dem thermostatisierten Vorlagebehälter 8 zugeführt wird. Die zweite Reaktionsstufe kann analog zur ersten aufgebaut, aber auch als Bodenkolonne ausgeführt werden, wobei die Temperatur- und Druckbedingungen nach der Maßgabe aufeinander abgestimmt sind, dass Einsatzstoff BCl₃ gasförmig und Nebenprodukt Me₃SiCl gasförmig oder flüssig, die Zwischenstufe Cl₃SiNHSiMe₃ und das Endprodukt Cl₃SiNHBCl₂ (TADB) flüssig vorliegen. Überschüssiges BCl₃ und das Nebenprodukt Me₃SiCl werden gasförmig am Kopf des Reaktors ausgeschleust und mit einem Phasenscheider getrennt. Zurückgewonnenes BCl₃ wird z. B. dem Vorlagebehälter 8 zugeführt, während Me₃SiCl in die Herstellung des Einsatzstoffes HMDS zurückgeführt wird. Das Endprodukt wird durch Phasenscheidung gereinigt und ggf. vom Nebenprodukt Me₃SiCl abgetrennt.

Die Phasenscheider 4 und 9 können nach dem Prinzip mechanischer Abtrennung funktionieren, beispielsweise Prallabscheider oder Zyklone. Es können aber auch thermische oder physikalisch-chemische Trennverfahren eingesetzt werden. Insbesondere kommen Destillation/Rektifikation oder Pervaporation in Betracht.

Die Produktausbeute an TADB beträgt über beide Stufen mindestens 84 % bezogen auf das eingesetzte HMDS. Die Charakterisierung des Produktes erfolgt durch Massenspektrometrie und Kernresonanzspektroskopie (siehe Beispiel 3).

## Patentansprüche

1. Kontinuierliches Verfahren zur Silazanspaltung,
**dadurch gekennzeichnet,**
**dass** wenigstens eines der Edukte gasförmig eingesetzt wird.

2. Verfahren nach Anspruch 1,
**dadurch gekennzeichnet,**
**dass** man ein Edukt in flüssiger Phase mit einem zweiten Edukt in gasförmiger Phase umsetzt.

3. Verfahren nach Anspruch 1,
**dadurch gekennzeichnet,**
**dass** alle Edukte gasförmig eingesetzt werden.

4. Verfahren nach einem der vorhergehenden Ansprüche,
**dadurch gekennzeichnet,**
**dass** man eine Silazanverbindung umsetzt mit wenigstens einer Verbindung der
Formel (2), ausgewählt aus
BHal₃₋ₓRₓ, AlHal₃₋ₓRₓ, GaHal₃₋ₓRₓ, InHal₃₋ₓRₓ, SiHal_{4-y}R_{y}, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{6-z}R_{z}, FeHal₃₋ₓRₓ oder ZnCl₂
worin x = 0 oder 1, y = 0, 1 oder 2 und z = 0, 1, 2 oder 3, Hal ausgewählt ist aus F, Cl, Br und I, und R Wasserstoff oder einen Kohlenwasserstoffrest mit 1 bis 20 C-Atomen darstellt.

5. Verfahren nach einem der vorhergehenden Ansprüche,
**dadurch gekennzeichnet,**
**dass** das Zielprodukt der Umsetzung aus dem Reaktionsgemisch entfernt wird.

6. Verfahren nach einem der vorhergehenden Ansprüche,
**dadurch gekennzeichnet,**
**dass** man eines der Edukte im Überschuss einsetzt.

7. Kontinuierliches Verfahren umfassend eine Silazanspaltung nach einem der Anspüche 1 bis 7 zur Herstellung einer Verbindung, welche das Strukturmerkmal N-Y aufweist, worin Y jeweils unabhängig ausgewählt ist aus B, Al, Ga, In, Si, Ge, P, Ti, Zr, V, Nb, Ta, Cr, Mo, W, Fe oder Zn, wobei man eine Silazanverbindung mit einer Verbindung der Formel (2) ausgewählt aus
BHal₃₋ₓRₓ, AlHal₃₋ₓRₓ, GaHal₃₋ₓRₓ, InHal₃₋ₓRₓ, SiHal_{4-y}R_{y}, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{6-z}R_{z}, FeHal₃₋ₓRₓ oder ZnCl₂
worin x = 0 oder 1, y = 0, 1 oder 2 und z = 0, 1, 2 oder 3, Hal ausgewählt ist aus F, Cl, Br und **I,** und R Wasserstoff oder einen Kohlenwasserstoffrest mit 1 bis 20 C-Atomen darstellt.

8. Kontinuierliches Verfahren umfassend zwei Silazanspaltungen nach einem der Ansprüche 1 bis 7 zur Herstellung einer Verbindung, welche das Strukturmerkmal X-N-Y aufweist, worin X und Y jeweils unabhängig ausgewählt sind aus B, Al, Ga, In, Si, Ge, P, Ti, Zr, V, Nb, Ta Cr, Mo, W, Fe oder Zn,
umfassend die Schritte
Umsetzen einer Verbindung der Formel (3)
R²₃SiNR¹Si R³₃,
worin R² und R³ jeweils unabhängig voneinander einen Kohlenwasserstoffrest mit 1 - 20 Kohlenstoffatomen darstellt und R¹ Wasserstoff oder einen Kohlenwasserstoffrest mit 1 - 20 C-Atomen darstellt, nacheinander in beliebiger Reihenfolge mit einer Verbindung der Formel (2) ausgewählt aus
BHal₃₋ₓRₓ, AlHal₃₋ₓRₓ, GaHal₃₋ₓRₓ, InHal₃₋ₓRₓ, SiHal_{4-y}R_{y}, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{6-z}R_{z}, FeHal₃₋ₓRₓ oder ZnCl₂
worin x = 0 oder 1, y = 0, 1 oder 2 und z = 0, 1, 2 oder 3, Hal ausgewählt ist aus F, Cl, Br und **I,** und R Wasserstoff oder einen Kohlenwasserstoffrest mit 1 bis 20 C-Atomen darstellt,
und einer Verbindung der Formel (4) ausgewählt aus
BHal₃₋ₓRₓ, AlHal₃₋ₓRₓ, GaHal₃₋ₓRₓ, InHal₃₋ₓRₓ, SiHal_{4-y}R_{y}, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{6-z}R_{z}, FeHal₃₋ₓRₓ oder ZnCl₂
worin x = 0 oder 1, y = 0, 1 oder 2, z = 0, 1, 2 oder 3 , Hal ausgewählt ist aus F, Cl, Br und I, und R Wasserstoff oder einen Kohlenwasserstoffrest mit 1 bis 20 C-Atomen darstellt.

9. Verfahren nach einem der vorhergehenden Ansprüche,
**dadurch gekennzeichnet,**
**dass** als Produkt ein molekularer Einkomponentenvorläufer für nicht-oxidische Keramiken gebildet wird.

10. Verfahren nach einem der vorhergehenden Ansprüche,
**dadurch gekennzeichnet,**
**dass** eine Verbindung der Formel (1)
Rₓ Hal₃₋ₓSi-NR¹-BR_{y} Hal_{2-y} hergestellt wird, wobei als Verbindung der Formel (2) SiHal_{4-y}R_{y} und als Verbindung der Formel (4) BHal₃₋ₓRₓ eingesetzt wird.

11. Verfahren nach einem der vorhergehenden Ansprüche,
**dadurch gekennzeichnet,**
**dass** die Reaktion bei Temperaturen von - 100 °C bis 300 °C und/oder einem Druck von 0,1 mbar bis 2 bar durchgeführt wird.

12. Verfahren nach einem der vorhergehenden Ansprüche,
**dadurch gekennzeichnet,**
**dass** Druck und Temperatur so eingestellt werden, dass die Edukte gasförmig, Zwischenprodukt und Endprodukt aber flüssig vorliegen.

13. Verfahren nach einem der vorhergehenden Ansprüche,
**dadurch gekennzeichnet,**
**dass** die Umsetzung mit Verbindungen der Formel (2) bei einer Temperatur > 25 °C, insbesondere ≥ 50 °C durchgeführt wird.

14. Verfahren nach einem der vorhergehenden Ansprüche,
**dadurch gekennzeichnet,**
**dass** die Silazanverbindung mit einem Überschuss an Verbindungen der Formel (2) umgesetzt wird.

15. Verfahren nach einem der vorhergehenden Ansprüche,
**dadurch gekennzeichnet,**
**dass** man als Nebenprodukt R₃SiHal aus dem Verfahren abtrennt.

16. Verfahren nach einem der vorhergehenden Ansprüche,
**dadurch gekennzeichnet,**
**dass** der Druck und die Temperatur so eingestellt werden, dass der Partialdruck eines während der Reaktion gebildeten Nebenproduktes der Formel (5)
R₃SiHal
niedriger als sein Sättigungsdampfdruck ist,
worin Hal jeweils unabhängig Cl, Br oder I bedeutet, R jeweils unabhängig einen Kohlenwasserstoffrest mit 1 bis 20 C-Atomen oder Wasserstoff darstellt,
x = 0, 1 oder 2 ist und y = 0 oder 1 ist.

17. Verfahren nach einem der vorhergehenden Ansprüche,
**dadurch gekennzeichnet,**
**dass** man eine Verbindung der Formel (3) zunächst mit einer Verbindung der Formel (2) und danach in einer weiteren Stufe mit einer Verbindung der Formel (4) umsetzt.

18. Verfahren nach Anspruch 8,
**dadurch gekennzeichnet,**
**dass** die Umsetzung der Verbindung der Formel (3) mit der Verbindung der Formel (2) bei Druck- und Temperatur-Bedingungen durchgeführt wird, bei denen die Edukte gasförmig vorliegen und das gebildete Zwischenprodukt als Flüssigkeit kondensiert, wobei das Zwischenprodukt in flüssiger Form abgetrennt wird.

19. Verfahren nach Anspruch 18,
**dadurch gekennzeichnet,**
**dass** die Umsetzung der Verbindung der Formel (3) mit der Verbindung der Formel (2) bei Druck- und Temperatur-Bedingungen durchgeführt wird, bei denen das Edukt der Formel (3) gasförmig, das Edukt mit der Formel (2) und das Zwischenprodukt flüssig vorliegen.

20. Verfahren nach einem der vorhergehenden Ansprüche,
**dadurch gekennzeichnet,**
**dass** die Verbindung CH₃Cl₂SiNHBCl₂, Cl₃SiNHBCl₂, (CH₃)₂ClSiNHBCl₂, Cl₃SiNCH₃BCl₂ oder CH₃Cl₂SiNCH₃BCl₂ hergestellt wird.

## Claims

1. Continuous method for silazane cleavage,
**characterized in that**
at least one of the educts is used in a gaseous form.

2. Method according to claim 1,
**characterized in that**
one educt in a liquid phase is reacted with a second educt in a gaseous phase.

3. Method according to claim 1,
**characterized in that**
all educts are used in a gaseous form.

4. Method according to one of the previous claims,
**characterized in that**
a silazane compound is reacted with at least one compound of formula (2) selected from
BHal₃₋ₓRₓ, AlHal₃₋ₓRₓ, GaHal₃₋ₓRₓ, InHal₃₋ₓRₓ, SiHal_{4-y}R_{y}, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{6-z}R_{z}, FeHal₃₋ₓRₓ or ZnCl₂
in which x = 0 or 1, y = 0, 1 or 2 and z = 0, 1, 2 or 3, Hal is selected from F, Cl, Br and I, and R represents hydrogen or a hydrocarbon residue with 1 to 20 C atoms.

5. Method according to one of the previous claims,
**characterized in that**
the target product of the reaction is removed from the reaction mixture.

6. Method according to one of the previous claims,
**characterized in that**
one of the educts is used in excess.

7. Continuous method comprising a silazane cleavage according to one of the claims 1 to 7 for producing a compound which has the structural feature N-Y
in which Y is in each case independently selected from B, Al, Ga, In, Si, Ge, P, Ti, Zr, V, Nb, Ta, Cr, Mo, W, Fe or Zn, wherein a silazane compound is reacted with a compound of the formula (2) selected from
BHal₃₋ₓRₓ, AlHal₃₋ₓRₓ, GaHal₃₋ₓRₓ, InHal₃₋ₓRₓ, SiHal_{4-y}R_{y}, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{6-z}R_{z}, FeHal₃₋ₓRₓ or ZnCl₂
in which x = 0 or 1, y = 0, 1 or 2 and z = 0, 1, 2 or 3, Hal is selected from F, Cl, Br and I, and R represents hydrogen or a hydrocarbon residue with 1 to 20 C atoms.

8. Continuous method comprising two silazane cleavages according to one of the claims 1 to 7 for producing a compound which has the structural features X-N-Y in which X and Y are each independently selected from B, Al, Ga, In, Si, Ge, P, Ti, Zr, V, Nb, Ta, Cr, Mo, W, Fe or Zn
comprising the steps
reacting a compound of formula (3)
R²₃SiNR¹SiR³₃,
in which R² and R³ each independently of one another represent a hydrocarbon residue with 1 - 20 carbon atoms and R¹ represents hydrogen or a hydrocarbon residue with 1 - 20 C atoms, successively in any desired order with a compound of the formula (2) selected from
BHal₃₋ₓRₓ, AlHal₃₋ₓRₓ, GaHal₃₋ₓRₓ, InHal₃₋ₓRₓ, SiHal_{4-y}R_{y}, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{6-z}R_{z}, FeHal₃₋ₓRₓ or ZnCl₂
in which x = 0 or 1, y = 0, 1 or 2 and z = 0, 1, 2 or 3, Hal is selected from F, Cl, Br and I, and R represents hydrogen or a hydrocarbon residue with 1 to 20 C atoms,
and with a compound of formula (4) selected from
BHal₃₋ₓRₓ, AlHal₃₋ₓRₓ, GaHal₃₋ₓRₓ, InHal₃₋ₓRₓ, SiHal_{4-y}R_{y}, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{6-z}R_{z}, FeHal₃₋ₓRₓ or ZnCl₂
in which x = 0 or 1, y = 0, 1 or 2 and z = 0, 1, 2 or 3, Hal is selected from F, Cl, Br and I and R represents hydrogen or a hydrocarbon residue with 1 to 20 C atoms.

9. Method according to one of the previous claims,
**characterized in that**
a molecular single component precursor for non-oxide ceramics is formed as the product.

10. Method according to one of the previous claims,
**characterized in that**
a compound of formula (1)
RₓHal₃₋ₓSi-NR¹-BR_{y}Hal_{2-y} is produced wherein SiHal_{4-y}R_{y} is used as a compound of formula (2) and BHal₃₋ₓRₓ is used as a compound of formula (4).

11. Method according to one of the previous claims,
**characterized in that**
the reaction is carried out at temperatures of -100°C to 300°C and/or at a pressure of 0.1 mbar to 2 bar.

12. Method according to one of the previous claims,
**characterized in that**
the pressure and temperature are adjusted such that the educts are present in a gaseous form, but the intermediate and final product are in a liquid form.

13. Method according to one of the previous claims,
**characterized in that**
the reaction with compounds of formula (2) is carried out at a temperature of > 25°C and in particular of ≥ 50°C.

14. Method according to one of the previous claims,
**characterized in that**
the silazane compound is reacted with an excess of compounds of the formula (2).

15. Method according to one of the previous claims,
**characterized in that**
the R₃SiHal is separated from the process as a secondary product.

16. Method according to one of the previous claims,
**characterized in that**
the pressure and temperature are adjusted such that the partial pressure of a secondary product of formula (5) R₃SiHal formed during the reaction
is lower than its saturation vapour pressure
in which Hal in each case independently denotes Cl, Br or I, R in each case independently represents a hydrocarbon residue with 1 to 20 C atoms or hydrogen,
x = 0, 1 or 2 and y = 0 or 1.

17. Method according to one of the previous claims,
**characterized in that**
a compound of formula (3) is firstly reacted with a compound of formula (2) and subsequently in a further stage with a compound of formula (4).

18. Method according to claim 8,
**characterized in that**
the reaction of the compound of formula (3) with the compound of formula (2) is carried out under pressure and temperature conditions under which the educts are present in a gaseous form and the intermediate that is formed condenses as a liquid, the intermediate being separated in a liquid form.

19. Method according to claim 18,
**characterized in that**
the reaction of the compound of formula (3) with the compound of formula (2) is carried out under pressure and temperature conditions under which the educt of formula (3) is present in a gaseous form while the educt of formula (2) and the intermediate are present in a liquid form.

20. Method according to one of the previous claims,
**characterized in that**
the compound CH₃Cl₂SiNHBCl₂, Cl₃SiNHBCl₂, (CH₃)₂ClSiNHBCl₂, Cl₃SiNCH₃BCl₂ or CH₃Cl₂SiNCH₃BCl₂ is produced.

## Revendications

1. Procédé continu de coupure de silazanes, **caractérisé en ce qu'**au moins l'un des réactifs de départ est utilisé sous forme gazeuse.

2. Procédé selon la revendication 1, **caractérisé en ce que** l'on fait réagir un réactif de part en phase liquide avec un deuxième réactif de départ en phase gazeuse.

3. Procédé selon la revendication 1, **caractérisé en ce que** tous les réactifs de départ sont utilisés sous forme gazeuse.

4. Procédé selon l'une quelconque des revendications précédentes, **caractérisé en ce que** l'on fait réagir un silazane avec au moins un composé de formule (2) choisi parmi BHal₃₋ₓRₓ, AlHal₃₋ₓRₓ, GaHal₃₋ₓRₓ, InHal₃₋ₓRₓ, SiHal_{4-y}R_{y}, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{5-z}R_{z}, FeHal₃₋ₓRₓ ou ZnCl₂,
où x = 0 ou 1, y = 0, 1 ou 2 et z = 0, 1, 2 ou 3, Hal est choisi parmi F, Cl, Br et I et R désigne un atome d'hydrogène ou un radical hydrocarboné comportant 1 à 20 atomes de carbone.

5. Procédé selon l'une quelconque des revendications précédentes, **caractérisé en ce que** le produit final de la réaction est séparé du mélange réactionnel.

6. Procédé selon l'une quelconque des revendications précédentes, **caractérisé en ce que** l'on utilise l'un des réactifs de départ en excès.

7. Procédé continu comprenant une coupure de silazanes selon l'une des revendications 1 à 7 pour produire un composé qui présente une structure N-Y, où chaque Y est choisi indépendamment parmi B, Al, Ga, In, Si, Ge, P, Ti, Zr, V, Nb, Ta, Cr, Mo, W, Fe ou Zn, dans lequel on fait réagir un silazane avec un composé de formule (2) choisi parmi
BHal₃₋ₓRₓ, AlHal₃₋ₓRₓ, GaHal₃₋ₓRₓ, InHal₃₋ₓRₓ, SiHal_{4-y}R_{y}, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{5-z}R_{z}, FeHal₃₋ₓRₓ ou ZnCl₂,
où x = 0 ou 1, y = 0, 1 ou 2 et z = 0, 1, 2 ou 3, Hal est choisi parmi F, Cl, Br et I et R désigne un atome d'hydrogène ou un radical hydrocarboné comportant 1 à 20 atomes de carbone.

8. Procédé continu comprenant deux coupures de silazanes selon l'une des revendications 1 à 7 pour produire un composé qui présente une structure X-N-Y, X et Y étant choisis chacun indépendamment parmi B, Al, Ga, In, Si, Ge, P, Ti, Zr, V, Nb, Ta, Cr, Mo, W, Fe ou Zn,
comprenant les étapes suivantes :
réaction d'un composé de formule (3)
R²₃SiNR¹SiR³₃,
où R² et R³ représentent chacun, indépendamment l'un de l'autre, un radical hydrocarboné comportant 1 à 20 atomes de carbone et R¹ représente un atome d'hydrogène ou un radical hydrocarboné comportant 1 à 20 atomes de carbone, successivement, dans un ordre quelconque,
avec un composé de formule (2) choisi parmi
BHal₃₋ₓRₓ, AlHal₃₋ₓRₓ, GaHal₃₋ₓRₓ, InHal₃₋ₓRₓ, SiHal_{4-y}R_{y}, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{5-z}R_{z}, FeHal₃₋ₓRₓ ou ZnCl₂,
où x = 0 ou 1, y = 0, 1 ou 2 et z = 0, 1, 2 ou 3, Hal est choisi parmi F, Cl, Br et I et R désigne un atome d'hydrogène ou un radical hydrocarboné comportant 1 à 20 atomes de carbone,
et avec un composé de formule (4) choisi parmi
BHal₃₋ₓRₓ, AlHal₃₋ₓRₓ, GaHal₃₋ₓRₓ, InHal₃₋ₓRₓ, SiHal_{4-y}R_{y}, GeHal_{4-y}R_{y}, PHal₃₋ₓRₓ, PHal_{5-z}R_{z}, TiHal_{4-y}R_{y}, ZrHal_{4-y}R_{y}, VHal₃₋ₓRₓ, VHal_{4-y}R_{y}, NbHal_{5-z}R_{z}, TaHal_{5-z}R_{z}, CrHal₃₋ₓRₓ, MoHal_{4-y}R_{y}, MoHal_{5-z}R_{z}, WHal_{5-z}R_{z}, FeHal₃₋ₓRₓ ou ZnCl₂,
où x = 0 ou 1, y = 0, 1 ou 2 et z = 0, 1, 2 ou 3, Hal est choisi parmi F, Cl, Br et I et R désigne un atome d'hydrogène ou un radical hydrocarboné comportant de 1 à 20 atomes de carbone.

9. Procédé selon l'une quelconque des revendications précédentes, **caractérisé en ce que** l'on forme, comme produit, un précurseur mono-composant moléculaire pour céramiques non oxydées.

10. Procédé selon l'une quelconque des revendications précédentes, **caractérisé en ce que** l'on produit un composé de formule (1)
Rₓ Hal₃₋ₓSi-NR¹-BR_{y}Hal_{2-y},
SiHal_{4-y}R_{y} étant utilisé comme composé de formule (2) et BHal₃₋ₓRₓ comme composé de formule (4).

11. Procédé selon l'une quelconque des revendications précédentes, **caractérisé en ce que** la réaction est réalisée à des températures de - 100° C à 300° C et/ou à une pression de 0,1 mbar à 2 bar.

12. Procédé selon l'une quelconque des revendications précédentes, **caractérisé en ce que** la pression et la température sont ajustées de telle sorte que les réactifs de départ se présentent sous forme gazeuse mais que le produit intermédiaire et le produit final soient liquides.

13. Procédé selon l'une quelconque des revendications précédentes, **caractérisé en ce que** la réaction avec les composés de formule (2) est réalisée à une température > 25° C, en particulier ≥ 50° C.

14. Procédé selon l'une quelconque des revendications précédentes, **caractérisé en ce que** l'on fait réagir le silazane avec un excès de composé de formule (2).

15. Procédé selon l'une quelconque des revendications précédentes, **caractérisé en ce que** l'on sépare du R₃SiHal en tant que sous-produit du procédé.

16. Procédé selon l'une quelconque des revendications précédentes, **caractérisé en ce que** la pression et la température sont ajustées de telle sorte que la pression partielle d'un sous-produit de formule (5) formé pendant la réaction,
R₃SiHal
est inférieure à sa pression de vapeur saturante,
où chaque Hal désigne indépendamment Cl, Br ou I, chaque R représente indépendamment un radical hydrocarboné comportant de 1 à 20 atomes de carbone ou un atome d'hydrogène, x = 0, 1 ou 2 et y = 0 ou 1.

17. Procédé selon l'une quelconque des revendications précédentes, **caractérisé en ce que** l'on fait réagir tout d'abord un composé de formule (3) avec un composé de formule (2) et ensuite, dans une autre étape, avec un composé de formule (4).

18. Procédé selon la revendication 8, **caractérisé en ce que** la réaction du composé de formule (3) avec le composé de formule (2) s'effectue dans des conditions de pression et de température telles que les réactifs de départ se présentent sous forme gazeuse et le produit intermédiaire formé est condensé sous forme liquide, le produit intermédiaire étant séparé sous forme liquide.

19. Procédé selon la revendication 18, **caractérisé en ce que** la réaction du composé de formule (3) avec le composé de formule (2) s'effectue dans des conditions de pression et de température telles que le réactif de départ de formule (3) se présente sous forme gazeuse, le réactif de départ de formule (2) et le produit intermédiaire se présentent sous forme liquide.

20. Procédé selon l'une quelconque des revendications précédentes, **caractérisé en ce que** l'on obtient le composé CH₃Cl₂SiNHBCl₂, Cl₃SiNHBCl₂, (CH₃)₂ClSiNHBCl₂, Cl₃SiNCH₃BCl₂ ou CH₃Cl₂SiNCH₃BCl₂.
